# FASCICULE DE BREVET EUROPEEN

(11) **EP 1 856 191 B1**
(45) Date de publication et mention de la délivrance du brevet: **03.09.2008**
(21) Numéro de dépôt: 05809285.9
(22) Date de dépôt: 14.10.2005
(51) Int. Cl.: C08G 77/08

(54) **PROCEDE DE PREPARATION D'ORGANOPOLYSILOXANE PAR POLYMERISATION ET REARRANGEMENT DE SILOXANES CYCLIQUES**
VERFAHREN ZUR HERSTELLUNG VON ORGANOPOLYSILOXAN DURCH POLYMERISATION UND UMLAGERUNG VON CYCLISCHEN SILOXANEN
METHOD FOR THE PREPARATION OF ORGANOPOLYSILOXANE BY POLYMERIZATION AND REARRANGEMENT OF CYCLIC SILOXANES

(30) Priorité: 15.10.2004 FR 0410937
(43) Date de publication de la demande: 21.11.2007
(73) Titulaire: Bluestar Silicones France, 69486 Lyon Cedex 03 (FR)
(72) Inventeur: FLEURY, Etienne, F-69540 IRIGNY (FR); MAS, Jean-Manuel, F-69590 MILLERY (FR); RAMDANI, Kamel, F-69008 LYON (FR)
(86) Numéro de dépôt international: PCT/FR2005/002543
(87) Numéro de publication internationale: WO 2006/042944

(56) Documents cités:
- EP-A- 0 023 187
- EP-A- 0 039 299
- FR-A- 2 353 589

## Description

Le domaine de l'invention est celui de la synthèse des silicones par polymérisation par ouverture de cycle(s) et/ou redistribution de polyorganosiloxanes cycliques et de polyorganosiloxanes linéaires et/ou non linéaires.

Plus précisément, la présente invention concerne un nouveau procédé de préparation d'une huile silicone par polymérisation et réarrangement de siloxanes cycliques en présence d'un catalyseur alcalin et d'un co-catalyseur qui est un cryptand du type diamine macrohétérobicyclique jouant le rôle d'accélérateur de polymérisation.

Les silicones sont, de nos jours, largement utilisés dans l'industrie. La majeure partie de ceux-ci sont des siloxanes polymérisés ou sont basés sur ces dérivés. Pour cette raison, la synthèse de ces polymères par polymérisation par ouverture de cycle(s) est un axe de recherche très important et de nombreuses publications sont parues sur le sujet. La polymérisation par ouverture de cycle d'oligosiloxanes utilise des monomères facilement synthétisables et purifiables et en outre elle permet un meilleur contrôle du poids moléculaire du polymère obtenu. En pratique, cette méthode est l'une des voies industrielles utilisées à ce jour.

La polymérisation par ouverture de cycle (ROP: *"Ring Opening Polymerization*") des organosiloxanes cycliques est une technique largement utilisée dans l'industrie des silicones pour préparer des huiles, des gommes ou des résines, fonctionnalisées ou non.

La polymérisation par ouverture de cycles d'oligosiloxanes est un processus complexe :

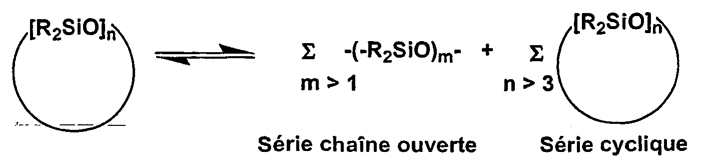

Les monomères les plus souvent utilisés à l'heure actuelle sont l'octaméthylcyclotétrasiloxane (D₄) et l'hexaméthylcyclotrisiloxane (D₃). La polymérisation peut être conduite par voie anionique via des catalyseurs basiques ou cationiques via des catalyseurs acides.

La voie cationique est souvent préférée pour la synthèse d'huiles polyorganosiloxanes linéaires de basse viscosité. Pour la polymérisation cationique, des catalyseurs type acides de Brönsted ou protoniques tels que H₂SO₄, HClO₄, acide triflique sont largement décrits. Ces acides peuvent également être mis sur des supports solides, minéraux par exemple. Ces catalyseurs sont efficaces à des températures modérées par exemple de l'ordre de 50 à 100°C. Les acides de Lewis tels que AlCl₃, SbCl₅, ou SnCl₄ peuvent également convenir mais nécessitent des conditions de température élevées (> 200°C). Les halogénures de phosphonitrile de structure Cl₃PNPCl₂NPCl₃.PCl₆ sont également décrits comme catalyseurs de polymérisation par ouverture de cycles efficaces à des températures de 40 à 120°C. Ce sont aussi de bons catalyseurs de condensation.

La voie anionique est plus souvent utilisée pour la formation de polymères linéaires à haut poids moléculaire. Ce procédé comporte 3 étapes :
-1- la phase d'amorçage est l'attaque du siloxane par la base pour conduire à la formation d'un silanolate en bout de chaîne : 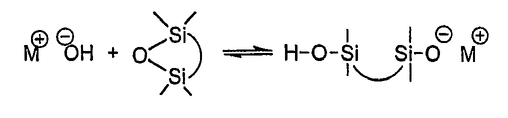
-2- la prolongation-raccourcissement des chaînes : 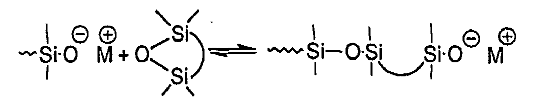
-3- les échanges interchaînes (mélange de chaînes, redistribution) :

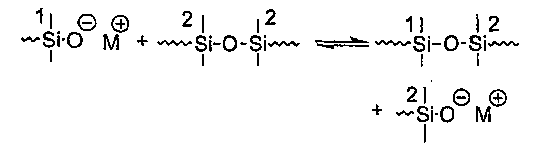

M correspond à un métal alcalin ou à un alcalinoterreux dans les schémas ci-dessus.

Quand les conditions d'équilibre sont atteintes, on obtient un mélange de polyorganosiloxanes cycliques et de polyorganosiloxanes linéaires.

Beaucoup d'amorceurs différents sont utilisés pour réaliser cette polymérisation. Par exemple, les hydroxydes de métaux alcalins ou alcalino terreux ou les complexes d'hydroxydes de métaux alcalins ou alcalino terreux avec des alcools, ainsi que les silanolates de métaux alcalins ou alcalino terreux. Ces derniers permettent d'éviter l'étape d'amorçage. La réaction de polymérisation nécessite une température élevée. La réaction peut être conduite à sec, dans un solvant ou en émulsion. La polymérisation peut être arrêtée en utilisant un additif acide qui réagit avec l'amorceur ou avec les chaînes polymériques pour rendre celles-ci non réactives. De plus, ces additifs peuvent être utilisés pour réguler le poids moléculaire du polymère et/ou ajouter une propriété intéressante. Dans la plupart des cas, les résidus de l'amorceur restent dans le polymère produit ou sont éliminés. Cela pénalise lourdement le procédé industriel de polymérisation par ouverture de cycle(s) et/ou par redistribution de polyorganosiloxanes cycliques en présence de K⁺OH⁻ ou SiO⁻M⁺, lequel procédé possède en outre l'inconvénient majeur d'être long. La cinétique de cette réaction est liée à la nature de l'anion et du contre ion. Pour un anion identique, plus le contre ion est volumineux et mou, plus la cinétique est rapide (par exemple Li⁺ < Na⁺ < K⁺ < NR₄⁺ < PR₄⁺). La solubilité de l'amorceur dans le milieu réactionnel est aussi très importante au regard de la cinétique. Ainsi, l'hydroxyde de potassium (KOH) est peu soluble et doit donc être mis en oeuvre dans des conditions de température élevée (≥ 150°C).

Dans le but d'accélérer la vitesse de polymérisation, diverses techniques ont été proposées. Par exemple, les demandes de brevet français n° 2 353 589 et européen n° 0 039 299 décrivent des procédés de polymérisation en masse de siloxanes cycliques en présence de polysiloxanes linéaires, jouant le rôle de bloqueur de la réaction de polymérisation, accélérée par la présence d'un système catalytique composé d'un catalyseur alcalin (ou amorceur de polymérisation anionique) et d'un co-catalyseur qui est un agent complexant macrohétérocyclique (appelé cryptand) tels que des dérivés de la tris(oxaalkyl)amine, des polyamines monocycliques et bicycliques. Ces co-catalyseurs ont été décrit pour la première fois dans la demande de brevet français n°2 201 304. Ces composés macrohétérocycliques sont connus pour avoir une capacité à former des complexes stables avec des cations compatibles. Les connaissances générales sur le mode d'action de ces co-catalyseurs peuvent se résumer ainsi:
- chaque molécule hétérocyclique est capable de former un complexe avec un cation. En effet, ces agents complexants possèdent des propriétés de complexation vis-à-vis des cations métalliques, notamment des cations du groupe I et II de la classification périodique des éléments, fournis par les amorceurs anioniques, ces cations métalliques s'insèrent dans les cavités intramoléculaires desdits complexants en formant des « cryptates », les ponts entre les atomes d'azote forment donc entre eux « une cage » dans laquelle le cation est capté.

La capacité de former des complexes et la stabilité des complexes formés dépendent de la disposition des hétéroatomes ou des groupes entourant le cation ainsi que des diamètres relatifs des cycles ou du cation.

Cependant, l'utilisation de ce type de co-catalyseur engendre des coûts prohibitifs pour une mise en oeuvre industriel car ces co-catalyseurs doivent être utilisés en mélange équimolaire avec le catalyseur de part leur mode d'action sur la catalyse. L'élimination ou la séparation de ce type de composés des huiles synthétisées est assez difficile et augmente d'autant plus le coût du procédé. Ceci est d'autant plus important lors de la préparation d'huiles silicones entrant dans des compositions réticulantes destinées à des applications de revêtements élastomèriques devant répondre aux contraintes imposées par le label « contact alimentaire » (par exemple revêtements pour moule à pâtisserie,....).

Les industries du domaine technique considéré sont donc dans l'attente d'un nouveau procédé utilisant un système catalytique alcalin permettant une cinétique de polymérisation rapide tout en étant performant quand à la rapidité d'obtention d'un palier de viscosité en cours de polymérisation. En effet, il est difficile de stabiliser aussi rapidement que possible la viscosité en cours de polymérisation vers un palier de viscosité proche de la viscosité recherchée du produit final. Ce palier correspond à l'équilibre de polymérisation de cette réaction et est donc un critère important de la réaction

Par ailleurs des améliorations sont toujours souhaitables en termes économiques et en terme de conditions opératoires industrielles.

En présence de cet état de la technique, l'un des objectifs essentiels de l'invention est de proposer un nouveau Procédé de préparation de polyorganosiloxanes par polymérisation par ouverture de cycle(s) et/ou redistribution de polyorganosiloxanes cycliques et de polyorganosiloxanes linéaires et/ou non linéaires par voie anionique via des catalyseurs basiques dans lequel l'obtention d'un palier de viscosité en cours de polymérisation est rapide et sans présenter les désavantages présentés ci-dessus de l'art antérieur.

Un autre objectif essentiel de l'invention est de fournir un nouveau procédé de préparation de polyorganosiloxanes par polymérisation par ouverture de cycle(s) et/ou redistribution de polyorganosiloxanes cycliques et de polyorganosiloxanes linéaires et/ou non linéaires et de polyorganosiloxanes linéaires ou non linéaires qui soit simple et économique à mettre en oeuvre, notamment en ce qui concerne les étapes finales de purification.

Un autre objectif essentiel de l'invention est de fournir un nouveau Procédé de préparation de polyorganosiloxanes par polymérisation par ouverture de cycle(s) et/ou redistribution de polyorganosiloxanes cycliques et de polyorganosiloxanes linéaires et/ou non linéaires au moyen d'un système catalytique performant, qui présente au moins l'une des caractéristiques suivantes :
- de réduire les résidus de catalyseur et de ses dérivés dans le polymère final, afin de préparer des polymères silicones de forte viscosité et de tenue thermique améliorée, et ce de façon rentable ;
- d'obtenir rapidement un palier de viscosité en cours de polymérisation ; et
- de garantir une haute reproductibilité.

Ces objectifs, parmi d'autres, sont atteints par la présente invention qui concerne un procédé de préparation de polyorganosiloxanes par polymérisation par ouverture de cycle(s) et/ou redistribution de polyorganosiloxanes cycliques et de polyorganosiloxanes linéaires et/ou non linéaires comprenant les étapes suivantes :
a) une étape de polymérisation dans laquelle:
   a-1) on prépare une composition réactionnel. à température ambiante comprenant :
      - au moins 20 % en poids, de préférence au moins 50 % en poids, par rapport au poids total de la composition d'au moins un siloxane cyclique de formule (1) suivante : 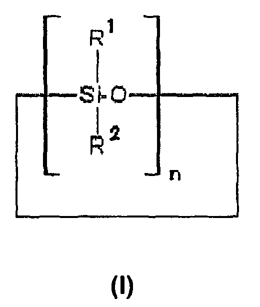 avec :
         - n =3, 4, 5, 6, 7 ou 8 ;
         - le symbole R¹ représente: le symbole R¹ représente: un atome d'hydrogène, un radical alkyle en C₁-C₁₂, linéaire ou ramifié, éventuellement substitué, un radical alcényle, un radical cycloalkyle en C₅-C₁₀, éventuellement substitué, un radical aryle en C₆-C₁₈ éventuellement substitué, un radical aralkyle, éventuellement substitué, et
         - le symbole R² représente un radical tel que R¹ ou un radical -OR³ avec R³ étant un atome d'hydrogène ou un radical alkyle en C₁-C₁₂, linéaire ou ramifié, éventuellement substitué; et
         - éventuellement jusqu'à 80 % en poids, de préférence jusqu'à 50% en poids, par rapport au poids total de la composition d'au moins un polyorganosiloxane comprenant des motifs siloxyles identiques ou différents entre eux de formule générale (**II**) :

            (R³)ₓ(R⁴)_{z}SiO_{(4-x-z)/2} (**II**)

            avec :
            - x et z = 0,1, 2 ou 3 et x+z ≤ 3 ;
            - le symbole R³ représente: un atome d'hydrogène, un radical alkyle en C₁-C₁₂ linéaire ou ramifié et éventuellement substitué par un ou plusieurs atomes tels que le chlore et/ou le fluor, un radical alcényle en C₁-C₁₂ éventuellement substitué, un radical halogénoalkyle en C₁-C₁₂ éventuellement substitué, un radical halogénoalkényle en C₁-C₁₂ éventuellement substitué, un radical cycloalkyle en C₃-C₈ éventuellement substitué, un radical cycloalkényle en C₃-C₈ éventuellement substitué, un radical cyanoalkyle en C₃-C₄ éventuellement substitué, un radical phényle, alkylphényle ou phénylalkyle en C₆-C₁₂ éventuellement substitué ; et
            - le symbole R⁴ est un radical tel que R³ ou un radical -OR⁵ avec R⁵ ayant la même définition que R³ ;
   - a-2) on ajoute un système catalytique, de préférence à une température supérieure ou égale à 100°C, constitué de x mmole d'au moins un catalyseur alcalin (**III**) et de y mmole d'au moins un cryptand (**IV**) qui est une diamine macrohétérobicyclique, et
   - a-3) on porte la température du mélange réactionnel à une température comprise entre 100 et 190°C ; de préférence entre 140 et 180°C ;
b) on effectue une étape de neutralisation ; et
c) éventuellement on procède à une étape de dévolatilisation, de préférence à une température comprise entre 175 et 185°C ;
   ledit procédé étant caractérisé en ce que :
   - pour le catalyseur alcalin (**III**) le nombre de mmole x utilisé répond au critère suivant : 0,005 ≤ x ≤ 5 mmoles pour 500 g de siloxane cyclique (**I**), de préférence 0,005 ≤ x ≤ 1 mmole pour 500 g de siloxane cyclique (**I**), et
   - pour le cryptand (**IV**) le nombre de mmole y utilisé répond au critère défini par le le ratio molaire y/x < 0,040, de préférence par le ratio molaire y/x < 0,020 et encore plus préférentiellement par le ratio molaire y/x < 0,010.

Par cycloalkyle, on entend un groupement hydrocarboné saturé mono- ou polycyclique, de préférence mono- ou bicyclique, présentant préférablement de 3 à 8 atomes de carbone. Par groupement hydrocarboné saturé polycyclique, on entend .un groupement présentant deux ou plusieurs noyaux cycliques rattachés les uns aux autres par des liaisons σ ou/et condensés deux à deux. Des exemples de groupements cycloalkyle polycycliques sont adamantane et norbornane. Des exemples de groupements cycloalkyle monocycliques sont cyclopropyle, cyclobutyle, cyclopentyle, cyclohexyle, cycloheptyle et cyclooctyle.

Par alcényle, on entend une chaîne hydrocarbonée instaurée, linéaire ou ramifiée, substituée ou non, présentant au moins une double liaison oléfinique, et plus préférablement une seule double liaison. Des exemples préférés de groupements alcényle sont les groupements allyle et homoallyle.

Il est du mérite des inventeurs d'avoir vaincu le préjugé technique qui voulait que, jusqu'alors, un ratio équimolaire de cryptand vis-à-vis du catalyseur ëtait nécessaire à la mise en oeuvre de ce type de catalyse pour la synthèse de polyorganosiloxanes par polymérisation par ouverture de cycle(s) et redistribution de polyorganosiloxanes cycliques.

Malgré tout cela les inventeurs n'ont pas hésité à réaliser de longs et nombreux essais, au terme desquels ils ont mis en évidence, de manière totalement surprenante et inattendue, que pour un classe définie de cryptand, en l'occurrence les diamines macrohétérobicycliques, le ratio molaire cryptand/catalyseur alcalin pour la préparation de polyorganosiloxanes, par polymérisation anionique peut être inférieur à 0,040 de préférence inférieur à 0,020 et encore plus préférentiellement inférieur à 0,010.

Le procédé selon l'invention est non seulement tout aussi efficace que jadis, mais également économique. Il est en outre simple à mettre en oeuvre, puisque les opérations de purification sont allégées du fait de la moindre quantité de co-catalyseur utilisé. Cet avantage est d'autant plus appréciable pour la préparation d'huiles silicones entrant dans des compositions réticulantes destinées à des applications de revêtements élastomèriques devant répondre aux contraintes imposées par le label « contact alimentaire » (par exemple revêtements pour moule à pâtisserie,....).

Ce procédé permet d'accéder à des polyorganosiloxanes de viscosité variable, y compris des polyorganosiloxanes de viscosité élevée.

Au sens de l'invention, la "polymérisation par ouverture de cycle(s)", correspond à une polymérisation dans laquelle un composé cyclique (monomère) est ouvert pour former un polymère linéaire.

Au sens de l'invention, la "polymérisation par redistribution", correspond à l'acception de l'homme du métier dans la chimie des silicones. En particulier, la "polymérisation par redistribution" s'entend dans le domaine des silicones, comme un réarrangement d'organosiloxanes de structures et/ou de masse molaire différentes. Ce réarrangement conduit à un seul nouveau polyorganosiloxane.

Suivant un premier mode de mise en oeuvre du procédé selon l'invention, le cryptand (**IV**) est une diamine macrohétérobicyclique de formule générale (**V**) : 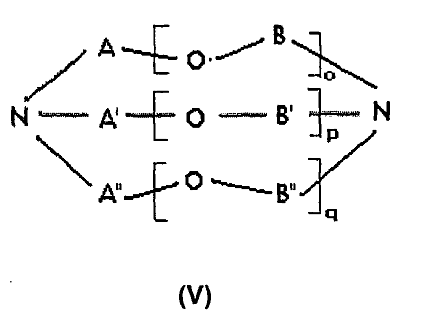 dans laquelle :
- o, p et q = 1, 2 ou 3 ;
- les symboles A, A', A", B, B' et B", qui peuvent être identiques ou différents, représentent des groupements de formules:

   -CH₂-CHR- ; -CH₂-CHR-CH₂ ; -CHR-CH₂-CH₂- ;

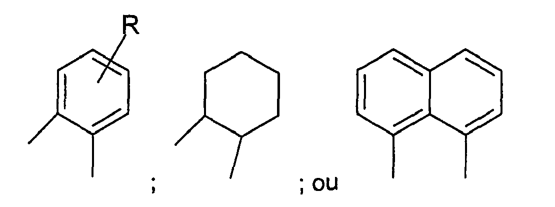

   avec R étant un hydrogène ou un radical hydrocarboné linéaire ou substitué en C₁-C₂₀. Des exemples de groupements alkyle sont notamment méthyle, éthyle, isopropyle, n-propyle, tert-butyle, isobutyle, n-butyle, n-pentyle, isoamyle,1,1-diméthylpropyle, n-decyle, undécyle, dodécyle, undécyle, dodécyle, tridécyle, tétradécyle, pentadécyle, hexadécyle, heptadécyle, octadécyle nonadécyle et eicosyle.

Suivant un deuxième mode de mise en oeuvre du procédé selon l'invention, le cryptand (**IV**) est choisi parmi le groupe constitué par les molécules (**VI**) à (**IX**) suivantes :

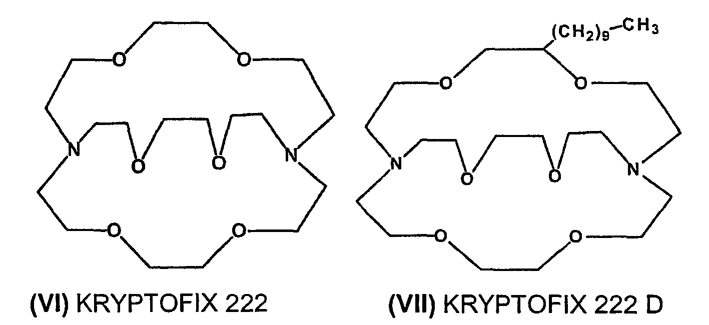

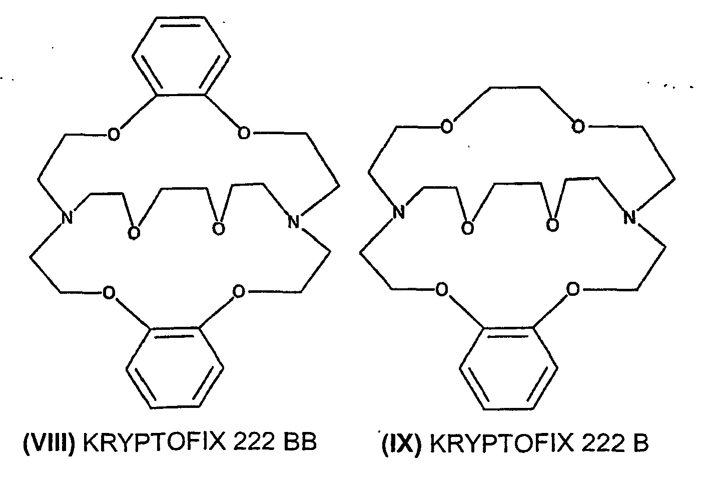

Dans ces oligocyclosiloxanes de formule (**I**), R¹ est de préférence choisi parmi les groupes alkyle ayant de 1 à 8 atomes de carbone inclus, éventuellement substitués par au moins un atome d'halogène, avantageusement, parmi les groupes méthyle, éthyle, propyle et 3,3,3-trifluoropropyle et ainsi que parmi les groupes aryles et, avantageusement, parmi les radicaux xylyle et tolyle et phényle.

Avantageusement, le siloxane cyclique de formule (**I**) est choisi parmi le groupe constitué par : l'octaméthylcyclotétrasiloxane (D4), l'hexaméthylcyclotrisoloxane (D₃), l'octophénylcyclotétrasiloxane, le tétraméthylcyclotétrasiloxane, le tétraméthyltétravinylcyclotétrasiloxane, l'hexaméthyldiphényl-1,1-cyclotétrasiloxane ; [(CH₃)₂SiO]₅, [(CH₃)₂SiO]₆, [(CH₃)₂SiO]₇, [(CH₃)₂SiO]₈, [(CH₃)₂SiO]₉, [(CH₃)(C₂H₅)SiO]₄, [(CH₃)(C₂H₅)SiO]₅, [(CH₃)(C₂H₅)SiO]_{6,} [(C₂H₅)₂SiO]₃, [(C₂H₅)₂SiO]₄, [(C₂H₅)SiO]₅, [(C₆H₅)₂SiO]_{3,} [(C₂H₅)(C₆H₅)SiO]₃, [(C₂H₅)(C₆H₅)SiO]₄, [(C₂H₅)(C₆H₅)SiO]₂(C₂H₅)₂SiO] et [(C₂H₅)(C₆H₅)SiO][(C₂H₅)₂SiO]₂.

Préférentiellement, le siloxane cyclique de formule (**I**) est l'octaméthylcyclotétrasiloxane (D4).

Selon un autre mode particulier de l'invention, le polyorganosiloxane (**II**) est présent jusqu'à 80 % en poids par rapport au poids total de la composition et est représenté par la formule (**X**) suivante : 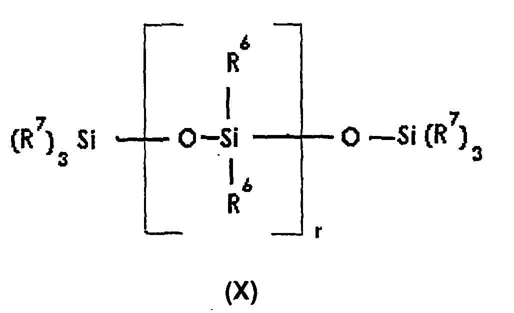 dans laquelle :
- les symboles R⁶, identiques ou différents entre eux, représentent un atome d'hydrogène, un radical alkyle en C₁-C₁₂ linéaire ou ramifié, saturé ou non saturé et éventuellement substitué par un ou plusieurs atomes tels que le chlore et/ou le fluor, un radical alkényle en C₁-C₁₂ éventuellement substitué, un radical halogénoalkyle en C₁-C₁₂ éventuellement substitué, un radical halogénoalkényle en C₁-C₁₂ éventuellement substitué, un radical cycloalkyle en C₃-C₈ éventuellement substitué, un radical cycloalkényle en C₃-C₈ éventuellement substitué, un radical cyanoalkyle en C₃-C₄ éventuellement substitué, un radical phényle, alkylphényle ou phénylalkyle en C₆-C₁₂ éventuellement substitué ;
- les symboles R⁷, identiques ou différents entre eux, représentent un radical R⁶ tel que défini ci-dessus ou un groupement -OR⁸ avec R⁸ représentent étant un atome d'hydrogène ou un radical alkyle en C₁-C₁₂, linéaire ou ramifié, éventuellement substitué par exemple par des fonctions amino, époxy ou esters ; et
- r ≥ 1, de préférence 1 ≤ r ≤ 10000 et encore plus préférentiellement 1 ≤ r ≤ 1000.

Selon une variante avantageuse du procédé selon l'invention, à l'étape a-1) le polyorganosiloxane (II) est présent jusqu'à 80 % en poids par rapport au poids total de la composition et est choisi parmi le groupe constitué par :
- le tétraméthyldivinylsiloxane, une huile α-ω-dihydroxy(polydiméthylsiloxane), l'hexaméthyldisiloxane, une huile polydiméthyldisoxane, les huiles phénylés dérivées d'organopolysiloxanes et les huiles vinylées dérivées d'organopolysiloxanes.

Selon un mode particulier de l'invention, lorsque l'on atteint la viscosité souhaitée, on neutralise le mélange par addition d'une solution acide après avoir éventuellement filtré et refroidit le mélange. Eventuellement, on peut distiller le mélange afin d'éliminer les molécules de faible masse moléculaire et récupérer l'huile résiduelle.

Le catalyseur alcalin (**III**) est préférentiellement choisi parmi le groupe constitué par : les hydroxydes de métaux alcalins, les silanolates de métaux alcalins, les alkoxydes de métaux alcalins et les siliconates alcalins.

Selon un mode de réalisation particulier de l'invention, le catalyseur alcalin (**III**) est un siliconate de potassium, préparé par chauffage d'un mélange constitué d'hexaméthyldisiloxane (M₂), d'octaméthylcyclotétrasiloxane (D4) et d'hydroxyde de potassium.

Des solutions acides utiles selon l'invention sont par exemples des solutions comprenant l'acide acétique, l'acide formique, l'acide propionique, l'acide glycolique, l'acide valérique, l'acide butyrique, l'acide caproïque, l'acide caprilique, l'acide caprique, l'acide octanoïque, l'acide laurique, l'acide myristique, l'acide stéarique, l'acide palmitique, l'acide oléique, l'acide undécylénique, l'acide chlorhydrique, HI, HBr, HClO4, H2SO4, HN03, H3P04, l'acide triflique, acide paratoluène sulfonique, des esters silylés de l'acide triflique, les acides de Lewis, les acides acryliques, les acides polyacryliques, les acides polyméthacryliques les organohalosilanes fonctionnalisés, les organohalosilanes fonctionnalisés combinés avec un disilazane, le diméthylvinylsilylacétate ou des composés à base de phosphore tels que le pentoxyde de phosphore, le trichloroéthyle phosphite, le tris(méthylsilyl)phosphate et l'acide phosphorique. Une solution à base de carboglace peut aussi être envisagée pour la solution acide (VII)

Selon un autre mode de réalisation préférée, la solution acide est une solution silylée comprenant un mélange d'acide phosphorique, d'hexaméthyldisiloxane (M₂) et d'octaméthylcyclotétrasiloxane (D4).

Une étape supplémentaire peut être envisagée, par exemple, on peut ajouter en fin de procédé une étape standard de dévolatilisation afin d'éliminer les composés volatiles de faibles poids moléculaire, par exemple par distillation entre 175 et 185°C sous une pression réduite.

Un autre aspect de l'invention concerne un procédé de préparation de polyorganosiloxanes par polymérisation par ouverture de cycle(s) et/ou redistribution de polyorganosiloxanes cycliques tel que décrit ci-dessus dans lequel les étapes a) et b) et éventuellement c) sont effectuées en continu.

Les exemples suivants sont donnés à titre indicatif et ne peuvent être considérés comme une limite du domaine et de l'esprit de l'invention.

### Structure des cryptands (co-catalyseurs) :

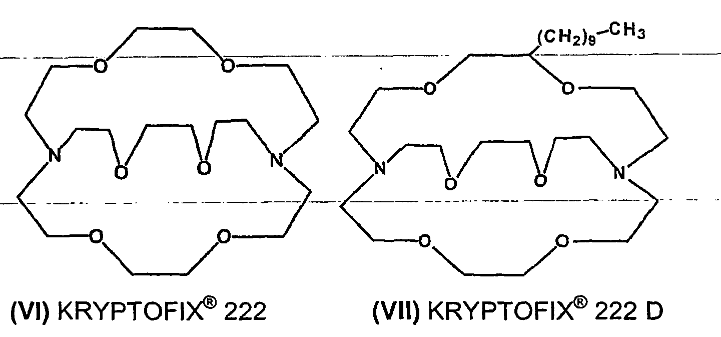

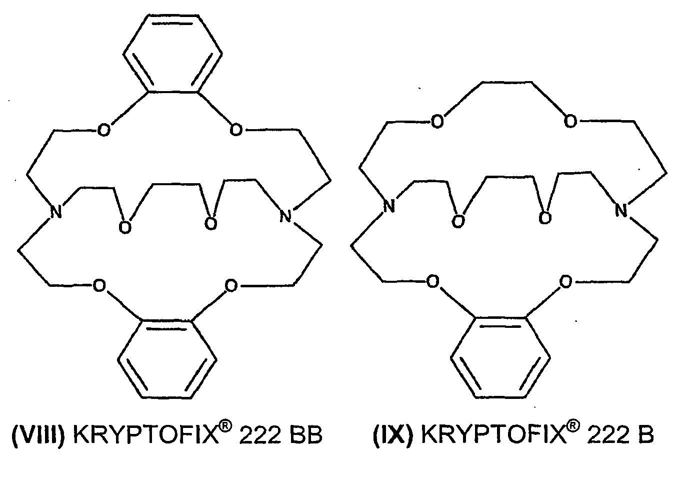

TDA-1 = tris [2-(2-methoxyethoxy) éthyl] amine ou tris (3,6-dioxaheptyl) amine

### Exemple 1 : synthèses en réacteur batch :

Dans un réacteur de capacité 1 litre, muni d'une agitation à ancre ou à ruban hélicoïdal, on introduit 500 g (soit 1,69 moles) d'octaméthyltétrasiloxane ou D4 et 1,25 g (6,75 mmol) de divinyltétramétyldisiloxane. Le mélange est ensuite porté à la température de la réaction : 150, 160, ou 170°C. A cette température, on ajoute le système catalytique comprenant le siliconate de potassium contenant 15% en poids d'hydroxyde de potassium et une quantité variable de co-catalyseur. La viscosité du milieu est suivie au moyen d'un couple mètre adapté à un agitateur.

A la fin de la réaction, le mélange est refroidi jusqu'à une température de 25 °C et on procède ensuite aux opérations usuelles de neutralisation (agent neutralisant : une solution silylée comprenant un mélange d'acide phosphorique, d'hexaméthyldisiloxane (M₂) et d'octaméthylcyclotétrasiloxane (D4)), filtration et dévolatilisation pour éliminer le monomère en équilibre avec le polymère et les cyclosiloxanes légers (distillation à 180°C sous une pression réduite de 10 mm de mercure). La mesure du taux de volatil est comprise entre 12.7 et 13.4 %, ce qui indique que l'équilibre thermodynamique a été atteint. On obtient des huiles α-ω-divinylpolydiméthylsiloxane.

Le Tableau I ci-dessous donne les résultats des essais réalisés.

**Tableau I.**

| Essais x-I = invention x-C= comparatif | Structure du co-catalyseur utilisé | [KOH] | [co-catalyseur] | Ratio molaire Co-catalyseur/KOH (y/x) | T(°C) | Temps de réaction A l'équilibre (minute) |
|---|---|---|---|---|---|---|
| 1-C | Pas de co-catalyseur | 30 ppm | 0 ppm | - | 170°C | 350 |
| 2-I | (VI) | 30 ppm | 0.5 ppm | 0.0025 | 170°C | 35 |
| 3-I | (IX) | 30 ppm | 0.5 ppm | 0.0025 | 170°C | 165 |
| 4-I | (VIII) | 30 ppm | 0.5 ppm | 0.0025 | 170°C | 210 |
| 5-C | Pas de co-catalyseur | 20 ppm | 0 ppm | - | 150°C | 500 s |
| 6-I | (VI) | 20 ppm | 5 ppm | 0.037 | 150°C | 35 |
| 7-I | (VI) | 20 ppm | 1 ppm | 0.0071 | 150°C) | 75 |
| 8-C | Pas de co-catalyseur | 15 ppm | 0 ppm | - | 150°C | Pas de réaction |
| 9-I | (VI) | 15 ppm | 0.5 ppm | 0.0050 | 150°C | 95 |
| 10-I | (VII) | 15 ppm | 0.5 ppm | 0.0050 | 150°C | 95 |
| 11-C | Pas de co-catalyseur | 20 ppm | 0 ppm | - | 170°C | 200 |
| 12-C | Pas de co-catalyseur | 10 ppm | 0 ppm | - | 170°C | Pas de réaction |
| 13-I | (VI) | 10 ppm | 0.5 ppm | 0.0075 | 170°C | 30 |
| 14-I | (VI) | 10 ppm | 0.5 ppm | 0.0075 | 160°C | 60 |
| 15-C | TDA 1 | 20 ppm | 1 ppm | 0.0086 | 150°C | > 400 |

Dans ces conditions, on observe que le temps de réaction pour atteindre l'équilibre de polymérisation est drastiquement diminué même lorsque le ratio molaire co-catalyseur/KOH (y/x) est inférieur à 0.040. On observe les meilleurs résultats avec le co-catalyseur KRYPTOFIX^{®} 222 de structure (**VI**).

Ces essais démontrent que contrairement à ce qui est décrit dans l'art antérieur, l'utilisation d'un ratio molaire faible co-catalyseur/KOH, même très inférieur à 0,040 conduit à une accélération de la cinétique de réaction tout en observant un équilibre de polymérisation rapide.

On constate aussi que l'essai comparatif (15-C) avec le co-catalyseur TDA-1 ne présente pas de bon résultat confirmant la spécificité du mode d'action de la classe des diamines macrohétérocycliques selon l'invention.

### Exemple 2 : synthèse en réacteur continu:

Dans un réacteur continu constitué des éléments principaux suivants successifs : un sécheur (stripping azote), un polymériseur (mélangeur statique), un neutraliseur (mélangeur statique) et un élément de dévolatilisation (par exemple film tombant ou Luwa). On introduit en continu de l'octaméthyltétracyclosiloxane (D4) qui est séché dans l'élément sécheur puis envoyé sur le polymériseur. Juste avant l'entrée du polymériseur, on introduit dans le flux de D4 le catalyseur et le co-catalyseur (sous la forme d'un mélange D4 + co-catalyseur Kryptofix^{®} 222). Les conditions opératoires de l'essai sont :
➢ Débit d'azote de séchage : 100 I/h
➢ Température de polymérisation : 170°C
➢ Durée de l'essai : 3 heures minimum
➢ Débit d'alimentation : 40 kg/h
➢ Quantité de potasse : 10 ppm (1 kg/h d'une solution de KOH/siliconate de K pour délivrer l'équivalent de 10ppm)
➢ Quantité de Kryptofix : 0,5 ppm (1 kg/h d'une solution de Kryptofix dans du D4 ou D5 pour délivrer l'équivalent de 0,5 ppm) > Pression de fonctionnement : environ 5 bar.

Le polymère est ensuite neutralisé en ligne par un agent neutralisant type acide phosphorique silylé. La mesure du taux de volatil est de l'ordre de 18% et la teneur en vinyle de l'huile α-ω-divinylpolydiméthylsiloxane est conforme.

Cet essai démontre que le système catalytique co-catalyseur (Kryptofix^{®})/KOH avec un ratio molaire y/x de 0.0075 est particulièrement adapté à la préparation de polyorganosiloxane avec un procédé en continu.

## Revendications

1. Procédé de préparation de polyorganosiloxanes par polymérisation par ouverture de cycle(s) et/ou redistribution de polyorganosiloxanes cycliques et de polyorganosiloxanes linéaires et/ou non linéaires comprenant les étapes suivantes :
a) une étape de polymérisation dans laquelle :
a-1) on prépare une composition réactionnel à température ambiante comprenant :
- au moins 20 % en poids par rapport au poids total de la composition d'au moins un siloxane cyclique de formule (**I**) suivante : 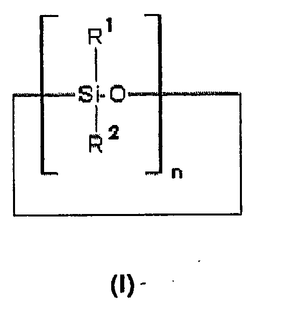 avec :
- n = 3, 4, 5, 6, 7 ou 8 ;
- le symbole R¹ représente: un atome d'hydrogène, un radical alkyle en C₁-C₁₂, linéaire ou ramifié, éventuellement substitué, un radical alcényle, un radical cycloalkyle en C₅-C₁₀, éventuellement substitué, un radical aryle en C₆-C₁₈ éventuellement substitué, un radical aralkyle, éventuellement substitué, et
- le symbole R² représente un radical tel que R¹ ou un radical -OR³ avec R³ étant un atome d'hydrogène ou un radical alkyle en C₁-C₁₂, linéaire ou ramifié, éventuellement substitué; et
- éventuellement jusqu'à 80 % en poids par rapport au poids total de la composition d'au moins un polyorganosiloxane comprenant des motifs siloxyles identiques ou différents entre eux de formule générale (**II**) :
(R³)ₓ(R⁴)_{z}SiO_{(4-x-z})_{/2} (**II**)
avec :
- x et z = 0, 1, 2 ou 3 et x+z ≤ 3 ;
- le symbole R³ représente: un atome d'hydrogène, un radical alkyle en C₁-C₁₂ linéaire ou ramifié et éventuellement substitué par un ou plusieurs atomes tels que le chlore et/ou le fluor, un radical alcényle en C₁-C₁₂ éventuellement substitué, un radical halogénoalkyle en C₁-C₁₂ éventuellement substitué, un radical halogénoalkényle en C₁-C₁₂ éventuellement substitué, un radical cycloalkyle en C₃-C₈ éventuellement substitué, un radical cycloalkényle en C₃-C₈ éventuellement substitué un radical cyanoalkyle en C₃-C₄ éventuellement substitué, un radical phényl, alkylphényle ou phénylalkyle en C₆-C₁₂ éventuellement substitué ; et
- le symbole R⁴ est un radical tel que R³ ou un radical -OR⁵ avec R⁵ ayant la même définition que R³ ;
- a-2) on ajoute un système catalytique, de préférence à une température supérieure ou égale à 100°C, constitué de x mmoles d'au moins un catalyseur alcalin (**III**) et de y mmole d'au moins un cryptand (**IV**) qui est une diamine macrohétérobicyclique, et
- a-3) on porte la température du mélange réactionnel à une température comprise entre 100 et 190°C ; de préférence entre 140 et 180°C ;
b) on effectue une étape de neutralisation ; et
c) éventuellement on procède à une étape de dévolatilisation, de préférence à une température comprise entre 175 et 185°C ;
ledit procédé étant **caractérisé en ce que** :
- pour le catalyseur alcalin (**III**) le nombre de mmole x utilisé répond au critère suivant : 0,005 ≤ x ≤ 5 mmoles pour 500 g de siloxane cyclique (**I**), de préférence 0,005 ≤ x≤ 1 mmole pour 500 g de siloxane cyclique (**I**), et
- pour le cryptand (**IV**) le nombre de mmole y utilisé répond au critère défini par le le ratio molaire y/x < 0,040, de préférence par le ratio molaire y/x < 0,020 et encore plus préférentiellement par le ratio molaire y/x < 0,010.

2. Procédé de préparation de polyorganosiloxanes par polymérisation par ouverture de cycle(s) et/ou redistribution de polyorganosiloxanes cycliques et de polyorganosiloxanes linéaires et/ou non linéaires selon la revendication 1 dans lequel le cryptand (**IV**) est une diamine macrohétérobicyclique de formule générale (**V**) : 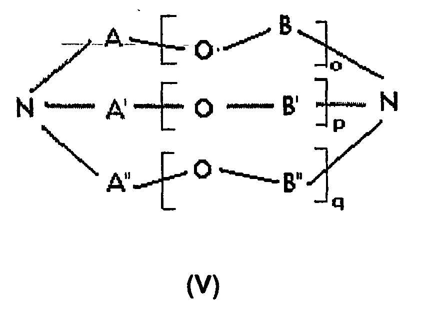 dans laquelle :
- o, p et q = 1, 2 ou 3;
- les symboles A, A', A", B, B' et B", qui peuvent être identiques ou différents, représentent des groupements de formules:
-CH₂-CHR- ; -CH₂-CH R-CH₂ ; -CH R-CH₂-CH₂- ; 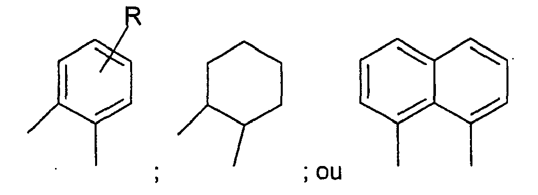
avec R étant un hydrogène ou un radical hydrocarboné linéaire ou sustitué en C₁-C₂₀.

3. Procédé de préparation de polyorganosiloxanes par polymérisation par ouverture de cycle(s) et/ou redistribution de polyorganosiloxanes cycliques et de polyorganosiloxanes linéaires et/ou non linéaires selon l'une des revendications précédentes dans lequel le cryptand (**IV**) est choisi parmi le groupe constitué par les molécules (**VI**) à (**IX**) suivantes :

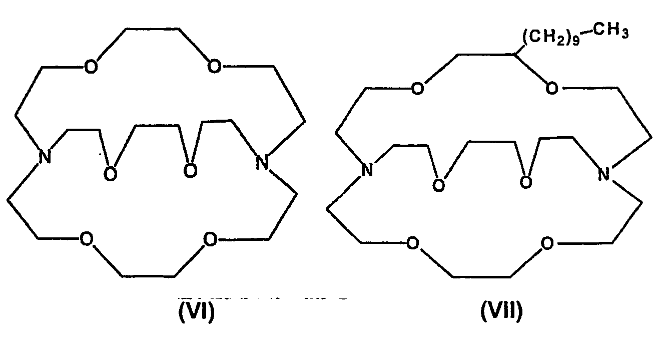

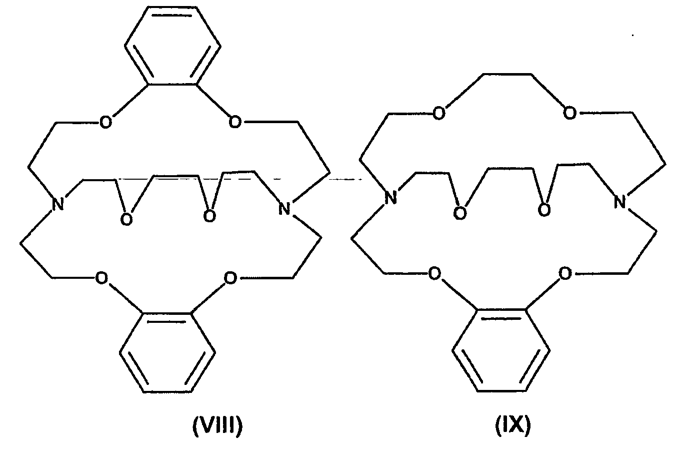

4. Procédé de préparation de polyorganosiloxanes par polymérisation par ouverture de cycle(s) et/ou redistribution de polyorganosiloxanes cycliques et de polyorganosiloxanes linéaires et/ou non linéaires selon l'une des revendications précédentes dans lequel le siloxane cyclique de formule (**I**) est choisi parmi le groupe constitué par : l'octaméthylcyclotétrasiloxane (D4), l'hexaméthylcyclotrisoloxane (D₃), l'octophénylcyclotétrasiloxane, le tétraméthylcyclotétrasiloxane, le tétraméthyltétravinylcyclotétrasiloxane, l'hexaméthyldiphényl-1,1-cyclotétrasiloxane ; [(CH₃)₂SiO]₅, [(CH₃)₂SiO]₆, [(CH₃)₂SiO]₇, [(CH₃)₂SiO]₈, [(CH₃)₂SiO]₉, [(CH₃)(C₂H₅)SiO]₃, [(CH₃)(C₂H₅)SiO]₄, [(CH₃)(C₂H₅)SiO]₅, [(CH₃)(C₂H₅)SiO]₆, [(C₂H₅)₂SiO]₃, [(C₂H₅)₂SiO]₄, [(C₂H₅)SiO]₅, [(C₆H₅)₂SiO]₃, [(C₂H₅)(C₆H₅)SiO]₃, [(C₂H₅)(C₆H₅)SiO]₄, [(C₂H₅)(C₆H₅)SiO]₂[(C₂H₅)₂SiO] et [(C₂H₅)(C₆H₅)SiO][(C₂H₅)₂SiO]₂.

5. Procédé de préparation de polyorganosiloxanes par polymérisation par ouverture de cycle(s) et/ou redistribution de polyorganosiloxanes cycliques et de polyorganosiloxanes linéaires et/ou non linéaires selon la revendication 4 dans lequel le siloxane cyclique de formule (**I**) est l'octaméthylcyclotétrasiloxane (D4).

6. Procédé de préparation de polyorganosiloxanes par polymérisation par ouverture de cycle(s) et/ou redistribution de polyorganosiloxanes cycliques et de polyorganosiloxanes linéaires et/ou non linéaires selon l'une des revendications précédentes dans lequel le polyorganosiloxane (**II**) est présent jusqu'à 80 % en poids par rapport au poids total de la composition et est représenté par la formule (**X**) suivante : 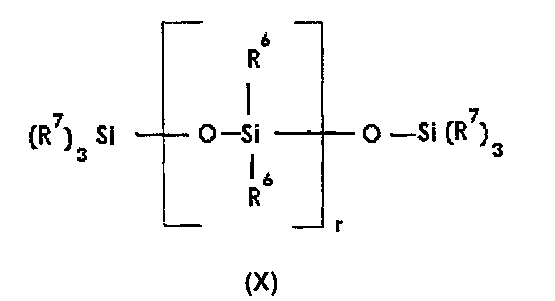 dans laquelle :
- les symboles R⁶ identiques ou différents entre eux, représentent un atome d'hydrogène, un radical alkyle en C₁-C₁₂ linéaire ou ramifié, saturé ou non saturé et éventuellement substitué par un ou plusieurs atomes tels que le chlore et/ou le fluor, un radical alkényle en C₁-C₁₂ éventuellement substitué, un radical halogénoalkyle en C₁-C₁₂ éventuellement substitué, un radical halogénoalkényle en C₁-C₁₂ éventuellement substitué, un radical cycloalkyle en C₃-C₈ éventuellement substitué, un radical cycloalkényle en C₃-C₈ éventuellement substitué, un radical cyanoalkyle en C₃-C₄ éventuellement substitué, un radical phényl, alkylphényle ou phénylalkyle en C₆-C₁₂ éventuellement substitué ;
- les symboles R⁷, identiques ou différents entre eux, représentent un radical R⁶ tel que défini ci-dessus ou un groupement -OR⁸ avec R⁸ représentent étant un atome d'hydrogène ou un radical alkyle en C₁-C₁₂, linéaire ou ramifié, éventuellement substitué, saturé ou non saturé ; et
- r≥ 1, de préférence 1 ≤ r ≤ 10000 et encore plus préférentiellement 1 ≤ r ≤ 1000.

7. Procédé de préparation de polyorganosiloxanes par polymérisation par ouverture de cycle(s) et/ou redistribution de polyorganosiloxanes cycliques et de polyorganosiloxanes linéaires et/ou non linéaires selon la revendication 6 dans lequel le polyorganosiloxane (**II**) est présent jusqu'à 80 % en poids par rapport au poids total de la composition et est choisi parmi le groupe constitué par : le tétraméthyldivinylsiloxane, une huile α-ω-dihydroxy(polydiméthylsiloxane), l'hexaméthyldisiloxane, une huile polydiméthyldisoxane, les huiles phénylés dérivées d'organopolysiloxanes et les huiles vinylées dérivées d'organopolysiloxanes.

8. Procédé de préparation de polyorganosiloxanes par polymérisation par ouverture de cycle(s) et/ou redistribution de polyorganosiloxanes cycliques et de polyorganosiloxanes linéaires et/ou non linéaires selon l'une des revendications précédentes dans lequel le catalyseur alcalin (**III**) est choisi parmi le groupe constitué par : les hydroxydes de métaux alcalins, les silanolates de métaux alcalins, les alkoxydes de métaux alcalins et les siliconates alcalins.

9. Procédé de préparation de polyorganosiloxanes par polymérisation par ouverture de cycle(s) et/ou redistribution de polyorganosiloxanes cycliques et de polyorganosiloxanes linéaires et/ou non linéaires selon la revendication 1 dans lequel les étapes a) et b) et éventuellement c) sont effectuées en continu.

## Claims

1. Process for the preparation of polyorganosiloxanes by ring-opening polymerization and/or redistribution polymerization of cyclic polyorganosiloxanes and of linear and/or nonlinear polyorganosiloxanes comprising the following stages:
a) a polymerization stage, in which:
a-1) a reaction composition is prepared at ambient temperature comprising:
- at least 20% by weight with respect to the total weight of the composition of at least one cyclic siloxane of following formula (**I**): 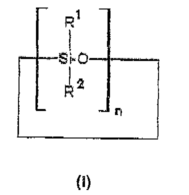 with:
- n = 3, 4, 5, 6, 7 or 8;
- the symbol R¹ represents: a hydrogen atom, an optionally substituted, linear or branched, C₁-C₁₂ alkyl radical, an alkenyl radical, an optionally substituted C₅-C₁₀ cycloalkyl radical, an optionally substituted C₆-C₁₈ aryl radical or an optionally substituted aralkyl radical, and
- the symbol R² represents a radical such as R¹ or an -OR³ radical, with R³ being a hydrogen atom or an optionally substituted, linear or branched, C₁-C₁₂ alkyl radical; and
- optionally up to 80% by weight with respect to the total weight of the composition of at least one polyorganosiloxane comprising siloxyl units, which are identical to or different from one another, of general formula (**II**):
(R³)ₓ(R⁴)_{z}SiO_{(4-x-z)/2} (**II**)
with:
- x and z = 0, 1, 2 or 3 and x + z ≤ 3 ;
- the symbol R³ represents: a hydrogen atom, a linear or branched C₁-C₁₂ alkyl radical which is optionally substituted by one or more atoms, such as chlorine and/or fluorine, an optionally substituted C₁-C₁₂ alkenyl radical, an optionally substituted C₁-C₁₂ haloalkyl radical, an optionally substituted C₁-C₁₂ haloalkenyl radical, an optionally substituted C₃-C₈ cycloalkyl radical, an optionally substituted C₃-C₈ cycloalkenyl radical, an optionally substituted C₃-C₄ cyanoalkyl radical or an optionally substituted C₆-C₁₂ phenyl, alkylphenyl or phenylalkyl radical; and
- the symbol R⁴ is a radical such as R³ or an
- OR⁵ radical with R⁵ having the same definition as R³;
- a-2) a catalytic system is added, preferably at a temperature of greater than or equal to 100°C, which catalytic system is composed of x mmol of at least one alkaline catalyst (**III**) and of y mmol of at least one cryptand (**IV**) which is a macroheterobicyclic diamine, and
- a-3) the temperature of the reaction mixture is brought to a temperature of between 100 and 190°C, preferably between 140 and 180°C;
b) a neutralization stage is carried out; and
c) optionally a devolatilization stage is carried out, preferably at a temperature of between 175 and 185°C;
said process being **characterized in that**:
- for the alkaline catalyst (**III**), the number of mmol x used meets the following criterion: 0.005 ≤ x ≤ 5 mmol per 500 g of cyclic siloxane (I), preferably 0.005 ≤ x ≤ 1 mmol per 500 g of cyclic siloxane (I), and
- for the cryptand (**IV**), the number of mmol y used meets the criterion defined by the molar ratio y/x < 0.040, preferably by the molar ratio y/x < 0.020 and more preferably still by the molar ratio y/x < 0.010.

2. Process for the preparation of polyorganosiloxanes by ring-opening polymerization and/or redistribution polymerization of cyclic polyorganosiloxanes and of linear and/or nonlinear polyorganosiloxanes according to Claim 1, in which the cryptand (**IV**) is a macroheterobicyclic diamine of general formula (**V**): 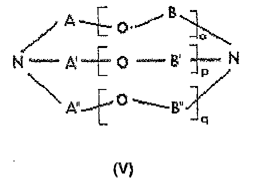 in which:
- o, p and q = 1, 2 or 3;
- the symbols A, A', A", B, B' and B", which can be identical or different, represent groups of formulae:
-CH₂-CHR-; -CH₂-CHR-CH₂-; -CHR-CH₂-CH₂-; 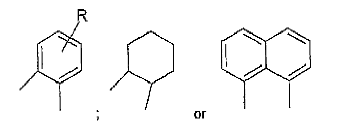
with R being a hydrogen or a linear or substituted C₁-C₂₀ hydrocarbon radical.

3. Process for the preparation of polyorganosiloxanes by ring-opening polymerization and/or redistribution polymerization of cyclic polyorganosiloxanes and of linear and/or nonlinear polyorganosiloxanes according to either of the preceding claims, in which the cryptand (**IV**) is chosen from the group consisting of the following molecules (**VI**) to (**IX**):

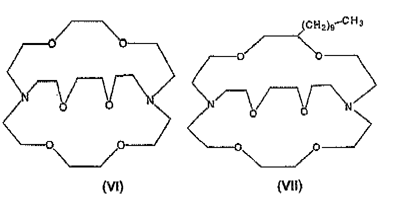

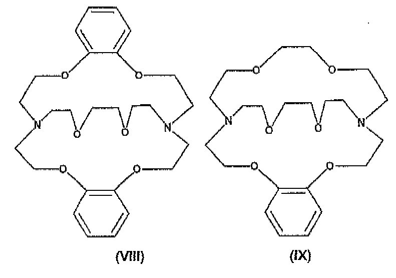

4. Process for the preparation of polyorganosiloxanes by ring-opening polymerization and/or redistribution polymerization of cyclic polyorganosiloxanes and of linear and/or nonlinear polyorganosiloxanes according to one of the preceding claims, in which the cyclic siloxane of formula (**I**) is chosen from the group consisting of: octamethylcyclotetrasiloxane (D4), hexamethylcyclotrisiloxane (D3), octaphenyl-cyclotetrasiloxane, tetramethylcyclotetrasiloxane, tetramethyltetravinylcyclotetrasiloxane, hexamethyl-1,1-diphenylcyclotetrasiloxane, [(CH₃)₂SiO]₅, [(CH₃)₂SiO]₆, [(CH₃)₂SiO]₇, [(CH₃)₂SiO]₈, [(CH₃)₂SiO]₉, [(CH3)(C₂H₅)SiO]₃, [(CH₃)(C₂H₅)SiO]₄, [(CH₃)(C₂H₅)SiO]_{5'} [(CH₃)(C₂H₅)SiO]_{6'} [(C₂-H₅)₂SiO]₃, [(C₂H₅)₂SiO]₄, (C₂H₅)₂SiO]₅, [(C₆H₅)₂SiO]₃, [(C₂H₅)(C₆H₅)SiO]₃, [(C₂H₅)(C₆H₅)SiO]₄, [(C₂H₅) (C₆H₅)SiO]₂[(C₂H₅)₂SiO] and [(C₂H₅)(C₆H₅)SiO] [(C₂H₅)₂SiO]₂.

5. Process for the preparation of polyorganosiloxanes by ring-opening polymerization and/or redistribution polymerization of cyclic polyorganosiloxanes and of linear and/or nonlinear polyorganosiloxanes according to Claim 4, in which the cyclic siloxane of formula (I) is octamethylcyclotetrasiloxane (D4).

6. Process for the preparation of polyorganosiloxanes by ring-opening polymerization and/or redistribution polymerization of cyclic polyorganosiloxanes and of linear and/or nonlinear polyorganosiloxanes according to one of the preceding claims, in which the polyorganosiloxane (II) is present at up to 80% by weight with respect to the total weight of the composition and is represented by the following formula (X): 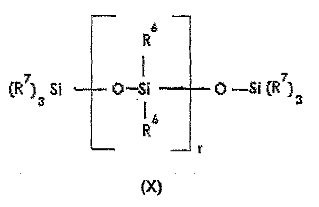 in which:
- the symbols R⁶, which are identical to or different from one another, represent a hydrogen atom, a saturated or unsaturated, linear or branched, C₁-C₁₂ alkyl radical which is optionally substituted by one or more atoms, such as chlorine and/or fluorine, an optionally substituted C₁-C₁₂ alkenyl radical, an optionally substituted C₁-C₁₂ haloalkyl radical, an optionally substituted C₁-C₁₂ haloalkenyl radical, an optionally substituted C₃-C₈ cycloalkyl radical, an optionally substituted C₃-C₈ cycloalkenyl radical, an optionally substituted C₃-C₄ cyanoalkyl radical or an optionally substituted C₆-C₁₂ phenyl, alkylphenyl or phenylalkyl radical;
- the symbols R⁷, which are identical to or different from one another, represent an R⁶ radical as defined above or an -OR³ group, with R⁸ being a hydrogen atom or a saturated or unsaturated, linear or branched, C₁-C₁₂ alkyl radical which is optionally substituted; and
- r ≥ 1, preferably 1 ≤ r ≤ 10 000 and more preferably still 1 ≤ r ≤ 1000.

7. Process for the preparation of polyorganosiloxanes by ring-opening polymerization and/or redistribution polymerization of cyclic polyorganosiloxanes and of linear and/or nonlinear polyorganosiloxanes according to Claim 6, in which the polyorganosiloxane (**II**) is present at up to 80% by weight with respect to the total weight of the composition and is chosen from the group consisting of: tetramethyldivinylsiloxane, an α,ω-dihydroxy(polydimethylsiloxane) oil, hexamethyldisiloxane, a polydimethyldisoxane oil, phenylated oils derived from organopolysiloxanes and vinylated oils derived from organopolysiloxanes.

8. Process for the preparation of polyorganosiloxanes by ring-opening polymerization and/or redistribution polymerization of cyclic polyorganosiloxanes and of linear and/or nonlinear polyorganosiloxanes according to one of the preceding claims, in which the alkaline catalyst (**III**) is chosen from the group consisting of: alkali metal hydroxides, alkali metal silanolates, alkali metal alkoxides and alkaline siliconates.

9. Process for the preparation of polyorganosiloxanes by ring-opening polymerization and/or redistribution polymerization of cyclic polyorganosiloxanes and of linear and/or nonlinear polyorganosiloxanes according to Claim 1, in which stages a) and b) and optionally c) are carried out continuously.

## Patentansprüche

1. Verfahren zur Herstellung von Polyorganosiloxanen mittels Ringöffnungspolymerisation und/oder Neuverteilung cyclischer Polyorganosiloxane und linearer und/oder nicht-linearer Polyorganosiloxane, umfassend die folgenden Schritte:
a) einen Polymerisationsschritt, in dem:
a-1) eine Reaktionszusammensetzung bei Umgebungstemperatur, umfassend:
- mindestens 20 Gew.-%, bezogen auf das Gesamtgewicht der Zusammensetzung, zumindest eines cyclischen Siloxans der folgenden Formel (1): 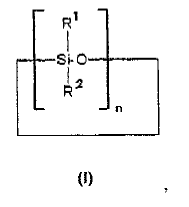 worin:
- n = 3, 4, 5, 6, 7 oder 8;
- das Symbol R¹: ein Wasserstoffatom, einen linearen oder verzweigten, gegebenenfalls substituierten C₁-C₁₂-Alkylrest, einen Alkenylrest, einen gegebenenfalls substituierten C₅-C₁₀-Cyctoatkylrest, einen gegebenenfalls substituierten C₆-C₁₈-Arylrest, einen gegebenenfalls substituierten Aralkylrest darstellt; und
- das Symbol R² einen Rest wie R¹ oder einen Rest -OR³ darstellt, worin R³ ein Wasserstoffatom oder ein linearer oder verzweigter, gegebenenfalls substituierter C₁-C₁₂-Alkylrest ist; und
- gegebenenfalls bis zu 80 Gew.-%, bezogen auf das Gesamtgewicht der Zusammensetzung, zumindest eines Polyorganosiloxans, umfassend Siloxyleinheiten, die gleich oder voneinander verschieden sind, der allgemeinen Formel (II):
(R³)ₓ(R⁴)_{z}SiO_{(4-x-z)/2} (**II**)
worin:
- x und z = 0, 1, 2 oder 3 und x + z ≤ 3;
- das Symbol R³: ein Wasserstoffatom, einen linearen oder verzweigten und gegebenenfalls durch ein oder mehrere Atome wie Chlor und/oder Fluor substituierten C₁-C₁₂-Alkylrest, einen gegebenenfalls substituierten C₁-C₁₂-Alkenylrest, einen gegebenenfalls substituierten C₁-C₁₂-Halogenalkylrest, einen gegebenenfalls substituierten C₁-C₁₂-Halogenalkenylrest, einen gegebenenfalls substituierten C₃-C₈-Cycloalkylrest, einen gegebenenfalls substituierten C₃-C₈-Cycloalkenylrest, einen gegebenenfalls substituierten C₃-C₄-Cyanoalkylrest, einen gegebenenfalls substituierten Phenyl-, C₆-C₁₂-Alkylphenyl- oder -Phenylalkylrest darstellt; und
- das Symbol R⁴ ein Rest wie R³ oder ein Rest -OR⁵ ist, worin R⁵ dieselbe Definition hat wie R³, hergestellt wird;
- a-2) ein katalytisches System, bevorzugt bei einer Temperatur über oder gleich 100°C, bestehend aus x mmol mindestens eines alkalischen Katalysators (III) und y mmol mindestens eines Kryptanden (IV), der ein makroheterobicyclisches Diamin ist, zugegeben wird; und
- a-3) die Temperatur des Reaktionsgemisches auf eine Temperatur zwischen 100 und 190 °C, bevorzugt zwischen 140 und 180 °C gebracht wird;
b) Durchführen eines Neutralisationsschrittes; und
c) gegebenenfalls Durchführen eines Schrittes zur Entfernung flüchtiger Bestandteile, bevorzugt bei einer Temperatur zwischen 175 und 185 °C;
wobei das Verfähren **dadurch gekennzeichnet ist, daß**:
- bezüglich des alkalischen Katalysators (III) die verwendete Zahl an mmol x dem folgenden Kriterium entspricht: 0,005 ≤ x ≤ 5 mmol auf 500 g cyclisches Siloxan (I), bevorzugt 0,005 ≤ x ≤1 mmol auf 500 g cyclisches Siloxan (I), und
- bezüglich des Kryptanden (IV) die verwendete Zahl an mmol y dem mittels einem Molverhältnis y/x < 0,040, bevorzugt einem Molverhältnis y/x < 0,020 und noch stärker bevorzugt einem Molverhältnis y/x 0,010 definierten Kriterium entspricht.

2. Verfahren zur Herstellung von Polyorganosiloxanen mittels Ringöffnungspolymerisation und/oder Neuverteilung cyclischer Polyorganosiloxane und linearer und/oder nicht-linearer Polyorganosiloxane nach Anspruch 1, worin der Kryptand (IV) ein makroheterobicyclisches Diamin der allgemeinen Formel (V) ist: 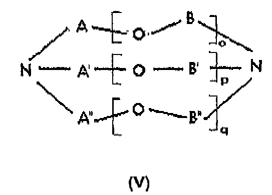 worin:
- o, p und q = 1, 2 oder 3;
- die Symbole A, A', A", B, B' und B", die gleich oder verschieden sein können, die Gruppen der Formeln:
-CH₂-CHR-; -CH₂-CH R-CH₂; -CH R-CH₂-CH₂-; 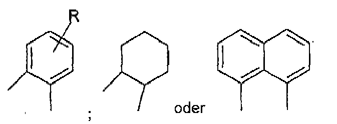
darstellen, worin R Wasserstoff oder ein linearer oder substituierter C₁-C₂₀-Kohlenwasserstoffrest ist.

3. Verfahren zur Herstellung von Polyorganosiloxanen mittels Ringöffnungspolymerisation und/oder Neuverteilung cyclischer Polyorganosiloxane und linearer und/oder nicht-linearer Polyorganosiloxane nach einem der vorhergehenden Ansprüche, worin der Kryptand (IV) aus der Gruppe, bestehend aus den folgenden Molekülen (VI) bis (IX), ausgewählt ist:

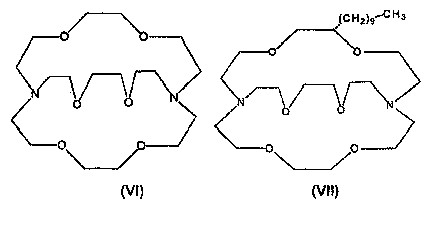

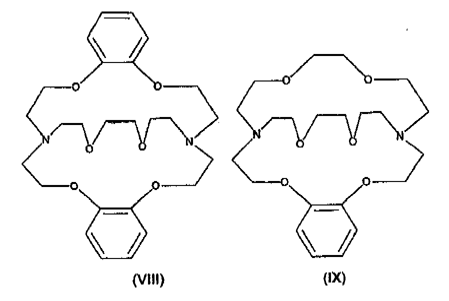

4. Verfahren zur Herstellung von Polyorganosiloxanen mittels Ringöffnungspolymerisation und/oder Neuverteilung cyclischer Polyorganosiloxane und linearer und/oder nicht-linearer Polyorganosiloxane nach einem der vorhergehenden Ansprüche, worin das cyclische Siloxan der Formel (I) ausgewählt ist aus der Gruppe, bestehend aus: Octamethylcyclotetrasiloxan (D4), Hexamethylcyclotrisiloxan (D3), Octophenylcyclotetrasiloxan, Tetramethylcyclotetrasiloxan, Tetramethyltetravinylcyclotetrasiloxan, Hexamethyldiphenyl-1,1-cyclotetrasiloxan; [(CH₃)₂SiO]₅, [(CH₃)₂SiO]₆, [(CH₃)₂SiO]₇, [(CH₃)₂SiO]₈, [(CH₃)₂SiO]₉, [(CH₃)(C₂H₅)SiO]₃, [(CH₃)(C₂H₅)SiO]₄, [(CH₃)(C₂H₅)SiO]₅, [(CH₃)(C₂H₅)SiO]₆, [(C₂H₅)₂SiO]₃, [(C₂H₅)₂SiO]₄, [(C₂H₅)₂,SiO]₅, [(C₆H₅)₂SiO]₃, [(C₂H₅)(C₆H₅)SiO]₃, [(C₂H₅)(C₆H₅)SiO]₄, [(C₂H₅)(C₆H₅)SiO]₂[(C₂H₅)₂SiO] und [(C₂H₅)(C₆H₅)SiO][(C₂H₅)₂SiO]_{2.}

5. Verfahren zur Herstellung von Polyorganosiloxanen mittels Ringöffnungspolymerisation und/oder Neuverteilung cyclischer Polyorganosiloxane und linearer und/oder nicht-linearer Polyorganosiloxane nach Anspruch 4, worin das cyclische Siloxan der Formel (I) das Octamethylcyclotetrasiloxan (D4) ist.

6. Verfahren zur Herstellung von Polyorganosiloxanen mittels Ringöffnungspolymerisation und/oder Neuverteilung cyclischer Polyorganosiloxane und linearer und/oder nicht-linearer Polyorganosiloxane nach einem der vorhergehenden Ansprüche, worin das Polyorganosiloxan (II) mit bis zu 80 Gew.-%, bezogen auf das Gesamtgewicht der Zusammensetzung, vorliegt und durch die folgende Formel (X) dargestellt wird: 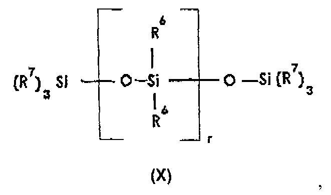 worin:
- die Symbole R⁶, die gleich oder voneinander verschieden sein können, ein Wasserstoffatom, einen linearen oder verzweigten, gesättigten oder ungesättigten und gegebenenfalls mit einem oder mehreren Atomen wie Chlor und/oder Fluor substituierten C₁-C₁₂-Alkylrest, einen gegebenenfalls substituierten C₁-C₁₂-Alkenylrest, einen gegebenenfalls substituierten C₁-C₁₂-Halogenalkylrest, einen gegebenenfalls substituierten C₁-C₁₂-Halogenalkenylrest, einen gegebenenfalls substituierten C₃-C₈-Cycloalkylrest, einen gegebenenfalls substituierten C₃-C₈-Cycloalkenylrest, einen gegebenenfalls substituierten C₃-C₄-Cyanoalkylrest, einen gegebenenfalls substituierten Phenyl-, C₆-C₁₂-Alkylphenyl- oder -Phenylalkylrest darstellen;
- die Symbole R⁷, die gleich oder voneinander verschieden sein können, einen Rest R⁶ wie oben definiert oder eine Gruppe -OR⁸ darstellen, worin R⁸ ein Wasserstoffatom oder einen linearen oder verzweigten, gegebenenfalls substituierten, gesättigten oder ungesättigten C₁-C₁₂-Alkylrest darstellt; und
- r ≥ 1, bevorzugt 1 ≤ r ≤ 10.000 und noch stärker bevorzugt 1 ≤ r ≤ 1.000.

7. Verfahren zur Herstellung von Polyorganosiloxanen mittels Ringöffnungspolymerisation und/oder Neuverteilung cyclischer Polyorganosiloxane und linearer und/oder nicht-linearer Polyorganosiloxane nach Anspruch 6, worin das Polyorganosiloxan (II) mit bis zu 80 Gew.-%, bezogen auf das Gesamtgewicht der Zusammensetzung, vorliegt und aus der Gruppe ausgewählt ist, bestehend aus: Tetramethyldivinylsiloxan, einem α-ω-Dihydroxy(polydimethylsiloxan)-Öl, Hexamethyldisiloxan, einem Polydimethyldisiloxan-Öl, den von Organopolysiloxanen abgeleiteten phenylierten Ölen und den von Organopolysiloxanen abgeleiteten vinylierten Ölen.

8. Verfahren zur Herstellung von Polyorganosiloxanen mittels Ringöfffnungspolymerisation und/oder Neuverteilung cyclischer Polyorganosiloxane und linearer und/oder nicht-linearer Polyorganosiloxane nach einem der vorhergehenden Ansprüche, worin der alkalische Katalysator (III) aus der Gruppe ausgewählt ist, bestehend aus: Alkalimetallhydroxiden, Alkalimetallsilanolaten, Alkalimetallalkoxiden und alkalischen Siliconaten.

9. Verfahren zur Herstellung von Polyorganosiloxanen mittels Ringöffnungspolymerisation und/oder Neuverteilung cyclischer Polyorganosiloxane und linearer und/oder nicht-linearer Polyorganosiloxane nach Anspruch 1, worin die Schritte a) und b) und gegebenenfalls c) kontinuierlich durchgeführt werden.
